# FASCICULE DE BREVET EUROPEEN

(11) **EP 2 830 916 B1**
(45) Date de publication et mention de la délivrance du brevet: **12.10.2016**
(21) Numéro de dépôt: 13720447.5
(22) Date de dépôt: 28.03.2013
(51) Int. Cl.: B60S 3/04, B08B 3/02, B05B 12/00

(54) **SYSTEME ET PROCEDE DE COMMANDE DES CARACTERISTIQUES DE LAVAGE D'UN VEHICULE EN COURS DE LAVAGE**
SYSTEM UND VERFAHREN ZUR STEUERUNG DER WASCHEIGENSCHAFTEN FÜR EIN FAHRZEUG, DAS GEWASCHEN WIRD
SYSTEM AND METHOD FOR CONTROLLING THE WASHING CHARACTERISTICS FOR A VEHICLE BEING WASHED

(30) Priorité: 28.03.2012 FR 1252782
(43) Date de publication de la demande: 04.02.2015
(73) Titulaire: Financière Clairac, 75116 Paris (FR)
(72) Inventeur: BROUCHET, Yves, F-67000 Strasbourg (FR); CHENDRI, Farouk, F-67100 Strasbourg (FR); FRANCOIS, Rémy, F-67270 Saessolsheim (FR)
(74) Mandataire: Kessler, Marc
(86) Numéro de dépôt international: PCT/FR2013/050687
(87) Numéro de publication internationale: WO 2013/144521

(56) Documents cités:
- EP-A1- 1 595 606
- US-A- 4 456 177
- US-A- 5 381 962

## Description

La présente invention concerne un système et un procédé de commande des caractéristiques de lavage d'un véhicule en cours de lavage dans une installation comportant une lance projetant un jet de liquide sous pression à destination dudit véhicule. Les lances en question sont manuportées par les utilisateurs, et disposées à l'extrémité d'un tuyau flexible véhiculant le liquide, l'ensemble faisant partie de sites de lavage de véhicules fournissant cet équipement en général sur plusieurs emplacements contigus. L'installation comporte par ailleurs un coffret de commande permettant de commander par une manette et/ou de visualiser les phases du cycle de lavage.

Le contexte est le suivant : de tels dispositifs de lavage à haute pression à lances manuportées sont implantés dans des centres de lavage dotés de pistes ou box parallèles constituant autant d'emplacements individualisés pour les véhicules. Dans chaque piste, la lance de lavage est disposée, lorsqu'elle n'est pas utilisée, dans un fourreau duquel elle peut être extraite pour asperger le véhicule. Elle équipe, comme indiqué, l'extrémité d'une tuyauterie souple dont l'autre extrémité est solidarisée à un portique supérieur de préférence rotatif, situé dans le box à un emplacement qui est en principe choisi pour permettre le nettoyage de toutes les faces du véhicule dans des conditions correctes. Ainsi, dans la plupart des cas, ce portique peut être implanté centralement dans le plafond du box, de telle sorte que l'utilisateur puisse aisément contourner la voiture tout en actionnant la lance de lavage dont la tuyauterie suit ses déplacements puisque le portique est rotatif.

De tels dispositifs comportent également une unité de commande permettant en général la sélection de différentes phases de lavages, ainsi qu'un bloc technique de production / distribution des différents liquides (eau savonneuse, eau munie d'un produit lustrant, eau déminéralisée, ...) correspondant à chaque phase du cycle, et un module de contrôle dudit bloc technique.

Cette unité de commande permet d'une part la mise en marche ou l'arrêt de la projection de liquide, et d'autre part la sélection d'un certain nombre de phases d'un cycle de lavage classique. Une manette, voire un ou plusieurs boutons, permet l'activation du changement de phase, au gré de l'utilisateur. Cette disposition n'est cependant pas optimale car elle génère une perte de temps en déplacement, puisqu'elle oblige l'utilisateur à revenir à proximité du sélecteur chaque fois qu'il envisage de changer de phase. En outre, pendant ce déplacement, la lance de lavage se trouve en général active, c'est-à-dire qu'elle projette du fluide sous pression, ce qui peut provoquer des désagréments. Ainsi, par exemple, il est difficile de tenir la lance d'une seule main lorsque l'autre est occupée à procéder à la sélection. Il existe également des risques d'éclaboussure intempestive au cours des trajets, etc.

Par ailleurs, au moment précis du changement de phase, l'une des mains de l'utilisateur est occupée à manipuler le bouton de commande pour sélectionner une autre phase, le jet sous pression étant toujours projeté par la lance, alors même que l'a phase suivante peut impliquer une augmentation de la pression et, selon la position de la lance à ce moment (lance dirigée vers le sol) entrainer des risques pour l'utilisateur qui ne la tient plus que d'une seule main.

Dans la plupart des configurations existantes, la pression du jet projeté sur le véhicule dépend simplement de la phase du cycle de lavage dans laquelle on se trouve. Or, il peut être nécessaire de procéder à des modifications de la pression à l'intérieur d'une phase, par exemple dans le sens d'une augmentation pour enlever une tache particulièrement résistante, ou au contraire dans le sens d'une diminution lorsqu'on veut nettoyer certaines parties spécifiques « plus fragiles » ou localisées à un endroit particulier du véhicule, par exemple les jantes d'une voiture, la chaîne d'une motocyclette, etc. US-A-5 381 962 montre le préambule de la revendication 1.

La présente invention a pour objectif d'une part de remédier aux différents inconvénients précités, tenant pour la plupart à la double localisation et donc à la distance séparant le cas échéant l'outil de lavage (la lance) et les moyens de sa commande, et d'autre part d'élargir les possibilités de commande pour augmenter la palette des service proposés en vue d'améliorer la prestation et la rendre plus attractive. Ainsi, l'invention donne à l'utilisateur la possibilité de procéder à certaines commandes directement à partir de la lance, commandes qui permettent de bénéficier de nouvelles fonctions au sein du dispositif de lavage à haute pression.

A titre principal, le système de commande des caractéristiques de lavage d'un véhicule de la présente invention est conçu pour intégrer des moyens de détection de forces exercées par l'utilisateur sur ledit tuyau, reliés à une unité centrale de traitement analysant chaque force.

Selon une possibilité, ces moyens de détection peuvent par exemple détecter des tractions exercées sur ledit tuyau, reliés à une unité centrale de traitement analysant chaque traction.

Les possibilités de modification des paramètres de fonctionnement du lavage en cours dépendent par conséquent d'un geste très simple, au surplus assez naturel dans l'exercice consistant à nettoyer un véhicule à l'aide d'une lance manuportée, et qui est interprété par une unité centrale de traitement comme un codage ou une partie d'un codage d'une demande de modification par l'utilisateur.

De préférence, lesdits moyens de détection sont mécaniques, et comportent un module à capteur de forces exercées sur le tuyau. Ce module peut par exemple être placé entre deux points d'une portion du tuyau ou du tuyau et du portique, et muni de moyens de rappel en position initiale de ladite portion.

La mesure de la traction est donc effectuée sur une portion particulière du tuyau flexible, laquelle doit bien entendu être remise dans sont état initial à l'issue de la traction, afin de permettre une autre commande du même type. Le choix d'une solution mécanique s'explique, outre la robustesse attendue, par l'environnement au contact permanent de liquides, qui peut rendre une solution électrique ou électronique plus complexe à mettre en oeuvre.

Plus précisément, les moyens de détection peuvent comporter un module capteur sensible à la traction exercée sur le tuyau, associé à au moins un ressort, fixés ensemble entre deux points constituant l'entrée et la sortie d'une boucle de tuyau d'une longueur supérieure à la longueur du module ou entre un point du tuyau et un point d'un bras rotatif du portique par rapport auquel le tuyau peut se déplacer.

Dans les deux cas, la fixation entre deux points a pour but de permettre l'établissement d'une course d'allure linéaire pour le module, course qui marque en fait la détection d'une traction. La boucle ou la fixation entre le tuyau et le bras confèrent à la portion de tuyau, qui n'est pas élastique dans la majorité des cas, une possibilité de déplacement/déformation qui permet de « donner du mou » et d'assurer la possibilité de la mesure dynamique d'une traction.

Le choix de la portion de tuyau au niveau de laquelle il est judicieux d'installer le module n'est pas anodin : ainsi, le module est par exemple, selon l'invention, disposé à l'extrémité libre du bras du portique rotatif dont est issu le tuyau, au niveau d'une portion du tuyau flexible qui ressent particulièrement bien les tractions qu'elle subit dans la mesure où elle est disposée à proximité de la zone de fixation du tuyau à un élément rigide. Par ailleurs, un ressort existe déjà dans cette zone, pour la protection de la première portion libre du tuyau en sortie des parties solides du portique rotatif.

Selon une configuration possible, le système de commande selon l'invention peut alors comporter :
- un organe rigide placé entre des spires d'un ressort de traction interposé entre l'extrémité libre d'un bras dudit portique rotatif et le tuyau s'en échappant, ledit organe étant apte à se déplacer dans une direction sensiblement selon l'axe du bras sous l'effet du déplacement des spires,
- un câble apte à coulisser le long du bras, dont une première extrémité est fixée audit organe et dont la seconde extrémité est fixée, en vue de l'entraîner, à une came mobile selon une rotation par rapport au bras d'axe perpendiculaire à l'axe de rotation dudit bras ;
- un ressort de compression disposé entre ladite came et une butée d'allure transversale du bras ;
- l'extrémité libre de la came étant entrainée, lorsque les ressorts sont sollicités, vers la face intérieure d'une paroi cylindrique d'axe confondu avec l'axe de rotation du bras, l'action de contact aboutissant à mettre en court-circuit deux pistes conductrices circulaires portées à des potentiels électriques différents, lesdites pistes étant reliées à l'unité centrale de traitement électrique de chaque signal généré par le contact.

Pour générer les signaux, la configuration par exemple mise en oeuvre est telle que l'extrémité libre de la came est équipée d'une pastille conductrice prévue pour entrer en contact simultanément avec deux pistes circulaires parallèles équipant la face intérieure d'un carter cylindrique fixe se développant autour du moyeu.

Alternativement, l'extrémité libre de la came peut exercer une action d'allure radiale contre un anneau intérieur mobile radialement de manière à entrer en contact avec un anneau extérieur placé au même niveau, chacun des anneaux étant muni d'une piste conductrice circulaire sur sa face destinée à entrer en contact avec l'autre.

L'organe rigide placé entre les spires du ressort de traction peut quant à lui être constitué d'une plaque placée entre les spires et deux ailes latérales guidées en translation selon l'axe du bras par des parois latérales dudit bras.

Dans un tel système, la came est par exemple prévue libre en rotation dans un étrier fixé au bras, à proximité du moyeu, et qui comporte une paroi formant butée pour le ressort de compression. Enfin, ce ressort de compression peut être disposé de manière à entourer le câble débouchant de la paroi formant butée jusqu'à sa fixation à la came.

Selon une autre possibilité, le module à capteur peut comporter un capteur de torsion exercée sur le tuyau, et les signaux envoyés à l'unité centrale seront par conséquent tributaires des torsions exercées par l'utilisateur sur le tuyau.

Selon l'invention, l'unité centrale de traitement inclut des moyens de calcul en vue du comptage du nombre et de la durée des tractions.

Il a été fait état de codage des informations que l'utilisateur souhaite faire parvenir à l'unité centrale, en vue d'une modification de la nature du lavage qu'il effectue. Ledit codage peut en fait prendre différentes formes, en particulier un comptage du nombre de tractions, comptage associé selon le cas à une modification de la pression ou à un changement de phase du cycle de lavage. La durée des tractions peut également constituer un moyen de codage, aux mêmes fins, utilisable le cas échéant en combinaison avec le comptage.

De même, selon l'invention, l'unité centrale de traitement peut comporter des moyens d'analyse de la forme ou enveloppe de la courbe d'exercice de chaque traction. La forme du signal envoyé par l'utilisateur, dans la mesure où elle obéit à des sollicitations physiquement simples et immédiates à mettre en oeuvre par lui, peut également être mise à profit dans le codage de l'action qu'il entreprend. La courbe du type d'effort imprimé à la tuyauterie en fonction du temps peut en effet prendre diverses formes : un créneau de longueur variable, la longueur en question étant comme indiqué un moyen de distinction entre deux types d'action. Une "attaque" de l'effort de traction selon une rampe à pente plus ou moins élevée, signifiant un effort progressif de traction appliqué au tuyau, peut également être interprétée comme une volonté de l'utilisateur d'augmenter ou de diminuer la pression, etc.

L'unité centrale de traitement peut d'ailleurs comporter des moyens de temporisation en vue d'appliquer pendant une durée prédéterminée une modification des caractéristiques de lavage résultant d'une traction. Ainsi, si l'ensemble est par exemple prévu pour qu'une traction augmente la pression de façon temporaire, notamment pour venir à bout d'une tache résistante, le système gère automatiquement la temporisation qui s'applique en cas de traction.

Pour améliorer le confort d'utilisation, le système de commande de l'invention peut également comporter des moyens de restitution sonore ou visuelle des changements appliqués aux caractéristiques de lavage, qui peuvent par exemple consister en un ou plusieurs parmi un manomètre, un dispositif lumineux émettant une lumière de couleur dépendant des changements effectués, un buzzer et une voix indiquant les changements etc. L'idée est d'effectuer un rendu montrant en quelque sorte à l'utilisateur que le signal ou le code envoyé à l'unité centrale par au moins une traction a d'une part bien été reçu, et d'autre part correctement interprété de sorte que le système change au moins temporairement un ou plusieurs paramètres de fonctionnement.

L'unité centrale de traitement peut dans cette optique être reliée à des moyens de déplacement de la manette de commande disposée sur le coffret en des positions reflétant les différentes phases de lavage, ce qui constitue un autre témoin visuel de la prise en compte d'une action sur le tuyau, si la force appliquée au tuyau a pour objectif de modifier la phase de lavage dans laquelle on se situe.

Pour pouvoir exercer la traction sur le tuyau dans de bonnes conditions, le système de commande de l'invention comporte au moins une poignée placée sur le tuyau en amont et au voisinage de la lance.

Le positionnement et l'ergonomie de la poignée sont alors prévus tels que l'utilisateur n'est pas incité à se suspendre à la poignée, ce qui est comme on l'a vu perçu par l'unité centrale comme un codage d'une action à effectuer, ladite poignée étant par ailleurs conçue et placée de manière à être préservée des chocs contre la carrosserie d'une part, et contre les salissures issues du lavage de véhicule d'autre part.

Selon l'invention, au moins une poignée peut être prévue coulissante par rapport au tuyau, et munie de moyens de blocage de la poignée sur le tuyau afin d'assurer un contrôle du changement de pression par l'intermédiaire d'un élément agrippant. Par ailleurs, chaque poignée peut comporter des moyens de communication expliquant son fonctionnement, y compris au moyen de sa forme qui peut indiquer la direction des forces à exercer sur le tuyau.

Comme on l'a mentionné auparavant, l'invention concerne également un procédé de commande des caractéristiques de lavage d'un véhicule en cours de lavage, qui se caractérise à titre essentiel en ce que l'unité centrale de traitement modifie au moins un paramètre de lavage lors de l'occurrence d'au moins une action, une action impliquant l'exercice d'une force sur le tuyau, de type traction ou torsion.

La modification dépend en fait, selon l'invention, d'une comparaison entre la courbe temporelle et/ou d'intensité de chaque action exercée et des schémas d'occurrence de différentes courbes d'actions prédéterminées et mémorisées dans l'unité centrale.

Ainsi, l'unité centrale de traitement peut avoir été programmée pour faire varier la pression d'une valeur prédéterminée pendant une durée prédéterminée à chaque action, avant de revenir à la pression initiale en réponse à au moins une action prédéterminée. C'est un mode de fonctionnement qui aboutit à coder par exemple une demande de pression plus élevée pour supprimer une tache résistante, ou laver plus particulièrement une zone très sale de la carrosserie du véhicule.

A titre d'exemple préférentiel, l'unité centrale de traitement peut compter le nombre d'actions, et modifier la pression d'une valeur de n bars par action, dans un sens ou dans l'autre.

Alternativement ou en combinaison, cette unité centrale peut calculer la durée de chaque action. L'analyse par l'unité centrale peut aboutir à incrémenter/décrémenter la pression selon que la durée de l'action est supérieure/inférieure à une valeur seuil de durée, ou inférieure/supérieure à une valeur seuil de durée.

En d'autres termes, on peut par exemple programmer l'unité centrale de telle sorte que des tractions brèves répétées permettent à chaque action d'incrémenter la pression par exemple de 10 bars, alors que des actions plus longues aboutissent à une décrémentation du même intervalle ou à un retour à la valeur de pression la plus basse. L'inverse est également possible, selon la programmation effectuée. Les plages d'utilisation de la pression peuvent aller de 7 à 170 bars, c'est-à-dire de la pression réseau à une pression jugée efficace mais dénuée de danger pour l'utilisateur.

L'intérêt de l'augmentation ou de la diminution de la pression est multiple : de la possibilité d'enlever des salissures résistantes à la possibilité pour l'utilisateur d'adapter la pression à ses propres capacités physiques en passant par l'adaptation de la pression projetée par la lance à des parties particulières du véhicule, par exemple plus fragiles.

Au lieu d'un simple comptage du nombre et de la durée des impulsions, il est également possible de programmer l'unité centrale de traitement de sorte qu'elle analyse la forme de la courbe d'exercice d'une traction et en particulier son intensité. Elle peut alors par exemple diminuer la pression si l'action est inférieure à une intensité prédéterminée, et l'augmenter en cas d'exercice d'une traction supérieure audit seuil.

Dans cette hypothèse, c'est l'intensité de la traction effectuée qui est analysée, ce qui peut sembler assez naturel : des tractions fortes semblent assez naturellement indiquer que l'on veut augmenter la pression, alors que des tractions faibles induisent l'effet inverse.

Le paramètre modifié peut bien entendu être différent de la pression : ainsi, l'occurrence d'une action peut induire un changement de phase dans un cycle de lavage piloté par l'unité centrale de traitement. Dans ce as, comme on l'a vu auparavant, la manette de commande peut être automatiquement déplacée pour refléter le changement de phase. Un signal lumineux de couleur, par exemple dans un luminaire situé au niveau du portique, peut également refléter la phase de lavage dans laquelle on se situe, une couleur étant associée à chaque phase.

Des combinaisons peuvent facilement être mises en oeuvre : l'intensité, le nombre ou la durée des tractions peut être utilisé pour faire varier la pression projetée par la lance, alors que le type de courbe d'exercice de la traction ou la fréquence entre les tractions peut aboutir à un changement de phase de cycle de lavage.

Selon un autre mode de fonctionnement possible, l'unité centrale de traitement peut augmenter la pression continûment tant qu'une traction est exercée sur le tuyau. Un tel mode peut être mis en oeuvre dès l'allumage, par conséquent à partir d'une pression nulle, ou à partir de la pression en cours d'utilisation, pour augmenter selon un schéma d'allure linéaire la « puissance » et l'efficacité du nettoyage.

En fait, l'idée à la base de l'invention est de procéder à un codage permettant de faire varier les paramètres du lavage dès lors qu'au moins une traction est exercée sur le tuyau par l'utilisateur, le type et la nature de la traction étant analysés par l'unité centrale de traitement qui reconnaît le codage effectué par l'utilisateur.

L'occurrence d'une action peut par ailleurs induire la mise en oeuvre par l'unité centrale d'un changement de tarification d'un cycle de lavage choisi par l'utilisateur.

Plus précisément, une augmentation de pression peut aboutir à diminuer la durée de la phase du cycle de lavage dans laquelle on se trouve, si l'utilisateur a payé un prix fixe ou à augmenter le tarif dans le cas contraire (coût selon la durée et le type de prestation demandée). L'augmentation de la pression s'analyse en effet évidemment comme un coût supplémentaire, et celui-ci est répercuté, dans une hypothèse de prix fixé à l'avance, en procédant à une diminution de durée de la phase en cours. A l'inverse, lorsque le coût facturé dépend précisément de la nature de la prestation demandée, il est bien entendu supérieur si cette dernière est mise en oeuvre de manière plus élaborée.

L'invention va à présent être décrite plus en détail, en référence aux figures annexées, pour lesquelles :
- la figure 1 représente en perspective un portique rotatif selon la présente invention ;
- la figure 2 est une vue agrandie de l'extrémité du bras fixe proximal du moyeu rotatif ; et
- la figure 3 montre également un agrandissement de la configuration du bras fixe à son extrémité libre.

Les figures représentent un exemple possible de configuration répondant aux caractéristiques de la présente invention.

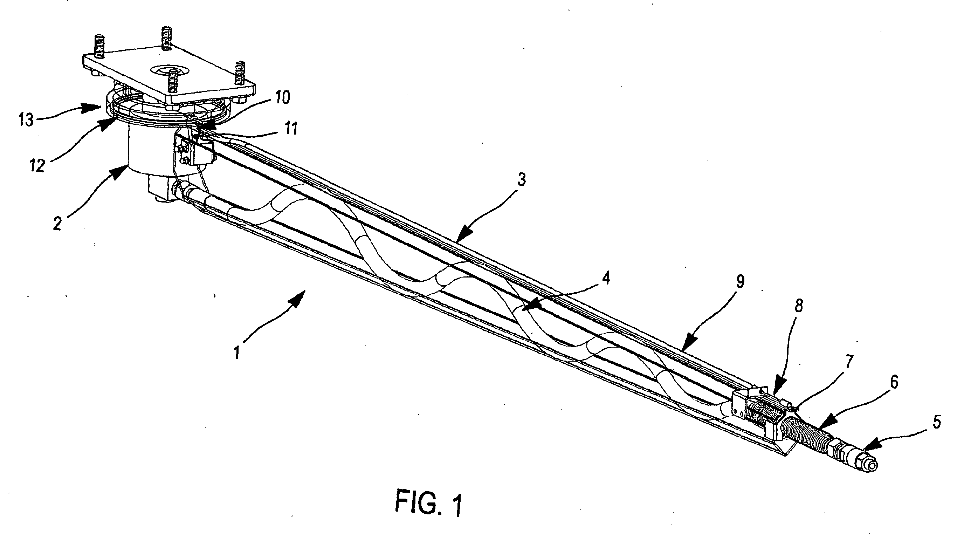

Ainsi, le portique rotatif (1) représenté en figure 1 se compose d'un moyeu rotatif (2) auquel est fixé un bras (3) dans lequel serpente le tuyau (4) qui est par conséquent guidé radialement à une certaine distance de l'axe de rotation du portique (1), de manière à faciliter l'opération de lavage à l'utilisateur qui se déplace en périphérie de son véhicule.

En sortie du bras (3), un connecteur (5) permet la fixation de la portion libre du tuyau (non représentée) qui se termine par la lance de lavage émettant le liquide à haute pression. Un ressort de traction (6) est fixé entre ledit connecteur (5) et le bras (3), autour de l'extrémité du tuyau (4) muni du connecteur (5).

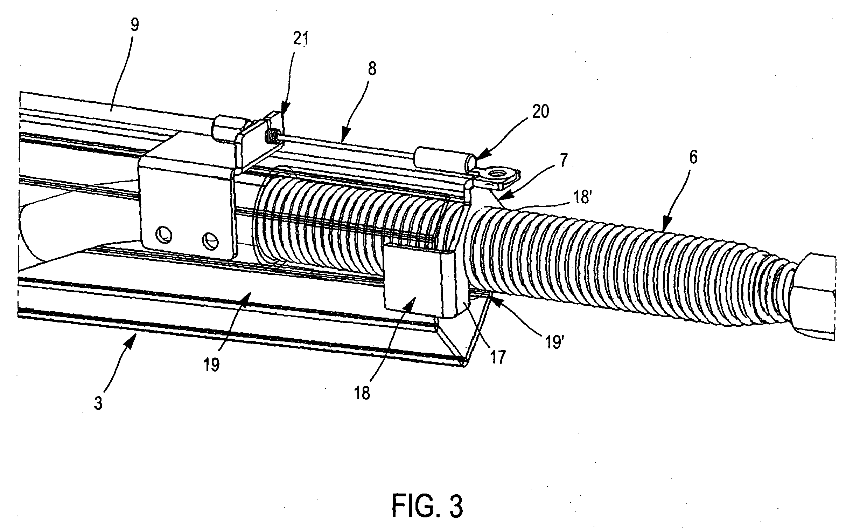

Un organe mécanique rigide (7), dont la description sera donnée en référence à la figure 3, est logé entre les spires du ressort (6), cet organe (7) se déplaçant par conséquent lorsque le ressort de traction (6) est sollicité.

Une première extrémité (20) d'un câble (8) y est arrimée, et ledit câble (8) se déplace dès lors également à chaque sollicitation du ressort de traction (6). Ce câble est guidé, notamment par une gaine (9), jusqu'à l'autre extrémité du bras (3) située à proximité du moyeu rotatif (2). La seconde extrémité du câble (8) y est fixée à une came (10) rotative par rapport à un axe perpendiculaire à la direction axiale du bras (3) et à l'axe de rotation du portique (1).

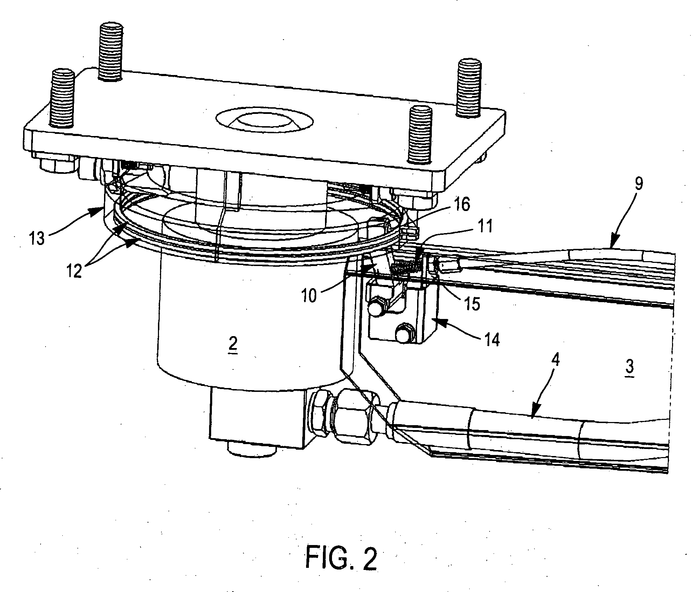

Lorsque le câble (8) est déplacé par une sollicitation exercée sur le ressort de traction (6), la came (10) est mue en rotation par le câble (8) à l'encontre d'un ressort de compression (11), comme cela sera expliqué plus en détail en référence à la figure 2.

L'extrémité libre de la came (10) est munie d'une pastille d'allure hémisphérique conductrice qui entre en contact avec deux pistes circulaires (12) équipant la face intérieure d'une enveloppe d'allure cylindrique (13) entourant le moyeu rotatif (2) au-dessus du niveau du bras (3).

En référence à la figure (2), la came (10) est rotative dans un étrier (14) fixé au bras (3), et qui comporte une paroi (15) servant de butée au ressort de compression (11), lequel entoure le câble (8) dont l'extrémité est solidarisée à la came (10).

Ce ressort (11) est donc comprimable entre ladite came (10) d'une part, et la paroi (15) d'autre part. Lorsque le câble (8) entraine la came (10) en rotation, par conséquent à l'encontre du ressort de compression (11), la pastille conductrice hémisphérique (16) disposée à l'extrémité libre de ladite came (10) vient en contact simultanément avec les deux pistes (12) conductrices, qui sont portées à des potentiels différents, par exemple 0 V et 24 V.

Chaque fois que la pastille conductrice (16) entre en contact avec les pistes (12), le contact permet la génération d'un signal reçu par l'unité centrale de traitement.

Les pistes conductrices circulaires (12) permettent la génération de tels signaux quelle que soit la position relative du bras (3) par rapport au carter (13) dont la paroi cylindrique est équipée desdites pistes (12), précisément du fait de leur caractère circulaire.

En référence à la figure (3), l'extrémité libre de l'arbre (3) dont dépasse le ressort de traction (6) est muni d'un organe (7) comprenant une plaque (17) d'allure perpendiculaire à l'axe du bras (3), disposée entre les spires du ressort de traction (6), et deux ailes (18, 18') qui permettent de guider le déplacement axial de l'organe (7) en ce qu'elles sont aptes à coulisser contre les parois latérales (19, 19') du bras (3).

Lorsque la portion extérieure du tuyau débouchant dans la lance de lavage est sollicitée, typiquement sous la forme d'une traction exercée par l'utilisateur, le ressort de traction est lui-même étiré et déplace l'organe rigide (7) vers la droite de la figure.

L'extrémité (20) du câble (8) est fixée en partie supérieure de cet organe rigide (7). Tout déplacement dudit organe (7) conduit par conséquent à un déplacement du câble (8) qui est non extensible, déplacement qui se répercute à son autre extrémité et fait pivoter la came (10) visible en figure 2.

Le déplacement de ce câble (8) est guidé et facilité le long du bras (3) par la gaine (9). Celle-ci court entre une pièce (21) fixée au bras (3), à proximité de son extrémité libre, et la paroi (15) de l'étrier (14) dans lequel pivote la came (10).

Chaque traction exercée par l'utilisateur sur le tuyau, typiquement à proximité de la lance de lavage, conduit donc à un pivotement de la came (10) et à l'établissement d'un contact entre la pastille conductrice (16) et les pistes conductrices (12), générant un signal tant que lesdites pistes (12) sont maintenues en court-circuit.

Selon la longueur de ce signal, l'unité centrale met en oeuvre un changement de paramètre spécifique au cours de l'opération de lavage.

Les figures ci-dessus montrent un exemple possible de mise en oeuvre de l'invention, qui comprend les variantes de formes et de configurations couvertes par les revendications annexées.

## Revendications

1. Système de commande des caractéristiques de lavage d'un véhicule en cours de lavage dans une installation comportant une lance projetant un jet de liquide sous pression à destination du véhicule, ladite lance étant manuportée par un utilisateur et disposée à l'extrémité d'un tuyau flexible véhiculant le liquide et issu d'un portique supérieur rotatif sensiblement centré par rapport au véhicule, un coffret de commande permettant de commander par une manette et/ou de visualiser les phases du cycle de lavage, **caractérisé en ce qu'**il comporte des moyens de détection de forces exercées par l'utilisateur sur ledit tuyau, reliés à une unité centrale de traitement analysant chaque force.

2. Système de commande des caractéristiques de lavage d'un véhicule selon la revendication précédente, dans lequel les moyens de détection sont mécaniques, et comportent un module à capteur de forces exercées sur le tuyau.

3. Système de commande des caractéristiques de lavage d'un véhicule selon la revendication précédente, comportant un module capteur sensible à la traction exercée sur le tuyau, associé à au moins un ressort de traction fixé entre deux points constituant l'entrée et la sortie d'une boucle de tuyau d'une longueur supérieure à la longueur du module ou fixé entre un point du tuyau et un point d'un bras rotatif du portique par rapport auquel le tuyau peut se déplacer.

4. Système de commande des caractéristiques de lavage d'un véhicule selon l'une des revendications 2 ou 3, dans lequel le module est disposé à l'extrémité libre du bras du portique rotatif dont est issu le tuyau.

5. Système de commande des caractéristiques de lavage d'un véhicule selon l'une des revendications 2 à 4, dans lequel le module à capteur comporte un capteur de torsion exercée sur le tuyau.

6. Système de commande des caractéristiques de lavage d'un véhicule selon l'une des revendications précédentes, dans lequel l'unité centrale de traitement inclut des moyens de calcul en vue du comptage du nombre et de la durée des tractions.

7. Système de commande des caractéristiques de lavage d'un véhicule selon l'une des revendications précédentes, dans lequel l'unité centrale de traitement comporte des moyens d'analyse de la forme de la courbe d'exercice de chaque traction.

8. Système de commande des caractéristiques de lavage d'un véhicule selon l'une des revendications précédentes, dans lequel l'unité centrale de traitement comporte des moyens de temporisation en vue d'appliquer une modification des caractéristiques de lavage résultant d'une traction pendant une durée prédéterminée.

9. Système de commande des caractéristiques de lavage d'un véhicule selon l'une des revendications précédentes, dans lequel l'unité centrale de traitement est reliée à des moyens de déplacement de la manette de commande en des positions reflétant les différentes phases de lavage.

10. Système de commande des caractéristiques de lavage d'un véhicule selon l'une des revendications précédentes, comportant au moins une poignée placée sur le tuyau en amont et au voisinage de la lance.

11. Procédé de commande des caractéristiques de lavage d'un véhicule en cours de lavage au moyen d'une lance projetant un jet de liquide sous pression à destination du véhicule par un système selon les revendications précédentes, dans lequel l'unité centrale de traitement modifie au moins un paramètre de lavage lors de l'occurrence d'au moins une action, une action impliquant l'exercice d'une force sur le tuyau, de type traction ou torsion.

12. Procédé de commande des caractéristiques de lavage d'un véhicule selon la revendication précédente, dans lequel la modification dépend d'une comparaison entre la courbe temporelle et/ou d'intensité de chaque action exercée et des schémas d'occurrence de différentes courbes d'actions prédéterminées et mémorisées dans l'unité centrale.

13. Procédé de commande des caractéristiques de lavage d'un véhicule selon l'une des revendications 11 ou 12, dans lequel l'unité centrale de traitement fait varier la pression d'une valeur prédéterminée à chaque action, avant de revenir à la pression initiale en réponse à au moins une action prédéterminée.

14. Procédé de commande des caractéristiques de lavage d'un véhicule selon la revendication 11, dans lequel l'occurrence d'une action induit un changement de phase dans un cycle de lavage d'un véhicule piloté par l'unité centrale de traitement.

15. Procédé de commande des caractéristiques de lavage d'un véhicule selon l'une des revendications 11 à 14, dans lequel l'occurrence d'une action induit la mise en oeuvre par l'unité centrale d'un changement de la tarification d'un cycle de lavage correspondant à un choix initial de l'utilisateur.

## Patentansprüche

1. Steuersystem der Wascheigenschaften eines Fahrzeugs während des Waschens in einer Anlage, die eine Lanze aufweist, die einen Flüssigkeitsstrahl unter Druck in Richtung des Fahrzeugs projiziert, wobei die Lanze von einem Benutzer gehandhabt wird und am Ende eines die Flüssigkeit befördernden Schlauchs angeordnet ist und von einem oberen, im Verhältnis zum Fahrzeug etwa zentrierten rotierenden Halter ausgeht, wobei ein Steuerkasten erlaubt, mittels eines Handgriffs die Phasen des Waschzyklus zu steuern und/oder zu visualisieren, **dadurch gekennzeichnet, dass** es Detektionsmittel von Kräften aufweist, die von dem Benutzer auf den Schlauch ausgeübt werden, die mit einer zentralen Verarbeitungseinheit verbunden sind, welche jede Kraft analysiert.

2. Steuersystem der Wascheigenschaften eines Fahrzeugs nach vorangehendem Anspruch, wobei die Detektionsmittel mechanisch sind und ein Sensormodul der auf den Schlauch ausgeübten Kräfte aufweisen.

3. Steuersystem der Wascheigenschaften eines Fahrzeugs nach vorangehendem Anspruch, **dadurch gekennzeichnet**, umfassend ein Sensormodul, das für die auf den Schlauch ausgeübten Zug sensibel ist, kombiniert mit mindestens einer Zugfeder, die zwischen zwei Punkten befestigt ist, welche den Eingang und den Ausgang einer Schlauchschlaufe mit einer Länge, die länger als die Länge des Moduls ist, bildet, oder zwischen einem Punkt des Schlauchs und einem Punkt eines rotierenden Arms des Halters befestigt ist, im Bezug zu dem der Schlauch verlagerbar ist.

4. Steuersystem der Wascheigenschaften eines Fahrzeugs nach einem der Ansprüche 2 oder 3, wobei das Modul am freien Ende des Arms des rotierenden Halters angeordnet ist, von dem der Schlauch ausgeht.

5. Steuersystem der Wascheigenschaften eines Fahrzeugs nach einem der Ansprüche 2 bis 4, wobei das Sensormodul einen Sensor der auf den Schlauch ausgeübten Torsion aufweist.

6. Steuersystem der Wascheigenschaften eines Fahrzeugs nach einem der vorangehenden Ansprüche, wobei die zentrale Verarbeitungseinheit Berechnungsmittel zum Zählen der Anzahl und der Dauer der Zugbeanspruchungen einschließt.

7. Steuersystem der Wascheigenschaften eines Fahrzeugs nach einem der vorangehenden Ansprüche, wobei die zentrale Verarbeitungseinheit Analysemittel der Form der Kurve der Ausübung jeder Zugbeanspruchung aufweist.

8. Steuersystem der Wascheigenschaften eines Fahrzeugs nach einem der vorangehenden Ansprüche, wobei die zentrale Verarbeitungseinheit Timingmittel zwecks Anwendung einer Änderung der Wascheigenschaften, resultierend aus einer Zugbeanspruchung während einer vorbestimmten Dauer, aufweist.

9. Steuersystem der Wascheigenschaften eines Fahrzeugs nach einem der vorangehenden Ansprüche, wobei die zentrale Verarbeitungseinheit mit Verlagerungsmitteln des Steuergriffs in Positionen verbunden ist, die verschiedene Waschphasen widerspiegeln.

10. Steuersystem der Wascheigenschaften eines Fahrzeugs nach einem der vorangehenden Ansprüche, umfassend mindestens einen Handgriff, der auf dem Schlauch vor und in der Nähe der Lanze platziert ist.

11. Steuerungsverfahren der Wascheigenschaften eines Fahrzeugs während des Waschens mit einer Lanze, die einen Flüssigkeitsstrahl unter Druck in Richtung des Fahrzeugs projiziert, mittels eines Systems nach den vorangehenden Ansprüchen, wobei die zentrale Verarbeitungseinheit beim Auftreten mindestens einer Aktion mindestens einen Waschparameter verändert, wobei eine Aktion das Ausüben einer Kraft auf den Schlauch vom Typ Zug oder Torsion einschließt.

12. Steuerungsverfahren der Wascheigenschaften eines Fahrzeugs nach vorangehendem Anspruch, wobei die Änderung von einem Vergleich der Zeit- und/oder Intensitätskurve jeder ausgeübten Aktion und den Fallschemata verschiedener vorbestimmter und in der zentralen Einheit gespeicherter Aktionskurven abhängt.

13. Steuerungsverfahren der Wascheigenschaften eines Fahrzeugs nach einem der Ansprüche 11 oder 12, wobei die zentrale Verarbeitungseinheit bei jeder Aktion den Druck um vorbestimmten Wert ändert, bevor eine Rückkehr zum Ausgangsdruck als Antwort auf mindestens eine vorbestimmte Aktion erfolgt.

14. Steuerungsverfahren der Wascheigenschaften eines Fahrzeugs nach Anspruch 11, wobei das Auftreten einer Aktion eine Phasenänderung in einem von der zentralen Verarbeitungseinheit gesteuerten Waschzyklus eines Fahrzeugs bewi rkt.

15. Steuerungsverfahren der Wascheigenschaften eines Fahrzeugs nach einem der Ansprüche 11 bis 14, wobei das Auftreten einer Aktion die Umsetzung einer Änderung der Preisfestsetzung eines einer ursprünglichen Auswahl des Benutzers entsprechenden Waschzyklus durch die zentrale Einheit bewirkt.

## Claims

1. A system for controlling the washing characteristics for a vehicle being washed in a facility including a hose nozzle spraying a jet of pressurized liquid toward the vehicle, said hose nozzle being handled by a user and arranged at the end of a flexible hose conveying the liquid and coming from an upper rotary gantry substantially centered relative to the vehicle, a control device making it possible to control, via a handle, and/or to view the phases of the washing cycle, **characterized in that** it includes means for detecting forces exerted by the user on said hose, connected to a central processing unit analyzing each force.

2. The system for controlling the washing characteristics for a vehicle according to the preceding claim, wherein the detection means are mechanical, and include a force sensor module for detecting forces exerted on the hose.

3. The system for controlling the washing characteristics for a vehicle according to the preceding claim, including a sensor module sensitive to the traction exerted on the hose, associated with at least one tension spring fastened between two points constituting the inlet and the outlet of a closed loop having a length greater than the length of the module or fastened between a point of the hose and a point of the rotary arm of the gantry relative to which the hose can move.

4. The system for controlling the washing characteristics of a vehicle according to one of claims 2 or 3, wherein the module is arranged at the free end of the arm of the rotary gantry from which the hose originates.

5. The system for controlling the washing characteristics for a vehicle according to one of claims 2 to 4, wherein the sensor module includes a torsion sensor for detecting the torsion exerted on the hose.

6. The system for controlling the washing characteristics of a vehicle according to one of the preceding claims, wherein the central processing unit includes computation means for counting the number and duration of the tractions.

7. The system for controlling the washing characteristics for a vehicle according to one of the preceding claims, wherein the central processing unit includes means for analyzing the shape of the exertion curve for each traction.

8. The system for controlling the washing characteristics for a vehicle according to one of the preceding claims, wherein the central processing unit includes time delay means in order to modify the washing characteristics resulting from a traction during a predetermined length of time.

9. The system for controlling the washing characteristics of a vehicle according to one of the preceding claims, wherein the central processing unit is connected to means for moving the control lever into positions reflecting the different washing phases.

10. The system for controlling the washing characteristics of a vehicle according to one of the preceding claims, including at least one handle placed on the hose upstream from and near the hose nozzle.

11. A method for controlling the washing characteristics of a vehicle during washing using at least one hose nozzle spraying a jet of pressurized liquid toward the vehicle via a system according to one of the preceding claims, wherein the central processing unit modifies at least one washing parameter upon the occurrence of at least one action, an action implying the exertion of a force on the hose, of the traction or torsion type.

12. The method for controlling the washing characteristics for a vehicle according to the preceding claim, wherein the modification depends on a comparison between the time and/or intensity curve of each action exerted and the occurrence diagrams of different predetermined action curves stored in the processing unit.

13. The method for controlling the washing characteristics for a vehicle according to one of claims 11 or 12, wherein the central processing unit varies the pressure by a predetermined value upon each action, before returning to the initial pressure in response to at least one predetermined action.

14. The method for controlling the washing characteristics for a vehicle according to claim 11, **characterized in that** an action causes a phase change in a washing cycle for a vehicle controlled by the central processing unit.

15. The method for controlling the washing characteristics for a vehicle according to one of claims 11 to 14, wherein the occurrence of an action causes the implementation, by the central processing unit, of a change in the price of a washing cycle corresponding to an initial choice by the user.
